# EUROPÄISCHE PATENTSCHRIFT

(11) **EP 0 759 038 B1**
(45) Veröffentlichungstag und Bekanntmachung des Hinweises auf die Patenterteilung: **24.09.1997**
(21) Anmeldenummer: 95919270.9
(22) Anmeldetag: 23.05.1995
(51) Int. Cl.: C08B 1/00

(54) **VERFAHREN ZUR HERSTELLUNG EINER CELLULOSESUSPENSION**
CELLULOSE SUSPENSION PRODUCTION PROCESS
PROCEDE DE PRODUCTION D'UNE SUSPENSION DE CELLULOSE

(30) Priorität: 19.04.1995 AT 673/95
(43) Veröffentlichungstag der Anmeldung: 26.02.1997
(73) Patentinhaber: LENZING AKTIENGESELLSCHAFT, 4860 Lenzing (AT)
(72) Erfinder: ZIKELI, Stefan, A-4844 Regau (AT); HINTERHOLZER, Peter, A-4861 Schörfling (AT)
(74) Vertreter: Schwarz, Albin, Dr. Kopecky & Schwarz Patentanwälte
(86) Internationale Anmeldenummer: AT9500099
(87) Internationale Veröffentlichungsnummer: WO9633221

(56) Entgegenhaltungen:
- EP-A- 0 356 419
- WO-A-94/06530
- WO-A-94/28217
- DD-A- 226 573
- US-A- 4 416 698

## Beschreibung

Die vorliegende Erfindung betrifft ein Verfahren zur Herstellung einer Suspension von Cellulose in einem in flüssiger Form vorliegenden tertiären Aminoxid, sowie ein Verfahren zur Herstellung cellulosischer Formkörper, wie Folien, Fasern und Membranen.

Seit einigen Jahrzehnten wird nach Verfahren zur Herstellung cellulosischer Formkörper gesucht, welche das heute in großem Maßstab angewendete Viskoseverfahren ersetzen sollen. Als eine nicht zuletzt wegen einer besseren Umweltverträglichkeit interessante Alternative hat sich dabei herauskristallisiert, Cellulose ohne Derivatisierung in einem organischen Lösungsmittel aufzulösen und aus dieser Lösung Formkörper, z.B. Fasern und Folien, zu extrudieren. Solcherart extrudierte Fasern erhielten von der BISFA (The International Bureau for the Standardization of man made fibers) den Gattungsnamen Lyocell. Unter einem organischen Lösungsmittel wird von der BISFA ein Gemisch aus einer organischen Chemikalie und Wasser verstanden.

Es hat sich herausgestellt, daß sich als organisches Lösungsmittel insbesondere ein Gemisch aus einem tertiären Aminoxid und Wasser sehr gut zur Herstellung von cellulosischen Formkörpern eignet. Als Aminoxid wird dabei in erster Linie N-Methylmorpholin-N-oxid (NMMO) verwendet. Andere Aminoxide sind z.B. in der EP-A - 0 553 070 beschrieben. Ein Verfahren zur Herstellung formbarer Celluloselösungen ist z.B. aus der EP-A - 0 356 419 bekannt.

In der US-A - 4,246,221 ist ein Aminoxidverfahren zur Herstellung spinnbarer Celluloselösungen beschrieben, welches als Ausgangsmaterial u.a. eine Mischung von Cellulose in flüssigem, wäßrigem N-Methylmorpholin-N-oxid (NMMO) verwendet. Gemäß diesem Verfahren wird in einer diskontinuierlich arbeitenden Mischvorrichtung eine Suspension von Cellulose in der wäßrigen Aminoxidlösung hergestellt und das Gemisch gleichzeitig unter vermindertem Druck erhitzt, wobei Wasser abgezogen wird und eine erste Lösung hergestellt wird, die nach Filtration und Nachbearbeitung in einem Extruder in eine formbare Lösung übergeführt wird. Ein Nachteil dieses vorbekannten Verfahrens ist die diskontinuierliche Herstellung der Cellulosesuspension im Mischer. Dieser diskontinuierliche Anfangsschritt macht das gesamte Aminoxidverfahren diskontinuierlich, was nachteilig ist, da jeder Formgebungsprozeß, z.B. das Spinnen zu Fasern, am besten kontinuierlich durchgeführt wird.

Aus der WO 94/28217 ist ein Verfahren zur Herstellung einer Vormischung auf Basis von Cellulose bekannt, aus welcher eine formbare Celluloselösung hergestellt werden kann. Gemäß diesem Verfahren wird zerkleinerte Cellulose und eine Aminoxidlösung in eine horizontal gelagerte, zylindrische Mischkammer eingebracht, welche einen Rotor mit axial beabstandeten Rührelementen aufweist. Die Mischung wird in der Mischkammer gerührt, indem der Rotor mit einer Geschwindigkeit von 40 bis 80 Umdrehungen pro Minute gedreht wird. Vorzugsweise wird die Mischung in der Mischkammer auf einer Temperatur oberhalb 65°C gehalten. Dieses Verfahrens weist jedoch die folgenden Nachteile auf:
1. Das Verfahren nimmt viel Zeit in Anspruch, da u.a. die Aminoxidlösung und die Cellulose nicht gleichzeitig in die Mischkammer eingebracht werden können, sondern nacheinander eingebracht werden müssen.
2. Ein weiterer Nachteil des Verfahrens besteht darin, daß es nur diskontinuierlich durchgeführt werden kann, wobei für jede Charge rund 21 Minuten benötigt wird.
3. Aufgrund der diskontinuierlichen Arbeitsweise müssen zwei derartige Mischer betrieben werden, um die Cellulose/Aminoxid-Mischung kontinuierlich an eine Vorrichtung abgeben zu können, in welcher die Celluloselösung hergestellt und kontinuierlich z.B. an eine Spinnmaschine abgegeben wird.
4. Die Verwendung von zwei Mischern bedeutet wiederum, daß sämtliche Vorrichtungen, wie Lagertanks, Leitungen, Pumpen, Filter etc., die zwischen den Mischern und der Spinnmaschine geschaltet sind, ebenfalls zweifach vorhanden sein müssen. Dies führt naturgemäß zu einem beträchtlichen technischen und finanziellen Mehraufwand.
5. Ein weiterer Nachteil ist darin zu sehen, daß pro Charge relativ große Mengen Aminoxid verarbeitet werden. Diese großen Mengen stellen ein Sicherheitsrisiko dar, da tertiäre Aminoxide bei erhöhter Temperatur instabil sind und zu Zersetzung neigen.
6. Diskontinuierlich betriebene Mischer sind darüberhinaus schlecht zu entleeren.

Die vorliegende Erfindung stellt sich somit die Aufgabe, ein Verfahren zur Verfügung zu stellen, welches die oben genannten Nachteile nicht aufweist und gemäß welchem aus zerkleinerter Cellulose und einer wäßrigen Aminoxidlösung in einem einzigen Schritt und mit hoher Geschwindigkeit eine homogene Cellulosesuspension hergestellt werden kann, die als Ausgangsprodukt für das Aminoxidverfahren verwendbar ist.

Das erfindungsgemäße Verfahren zur Herstellung einer Suspension von Cellulose in einem flüssigen, wäßrigen tertiären Aminoxid, wobei zerkleinerte Cellulose mit dem flüssigen, wäßrigen tertiären Amionoxid vermischt wird, ist dadurch gekennzeichnet, daß
(A) die zerkleinerte Cellulose mit dem flüssigen, wäßrigen tertiären Aminoxid in Kontakt gebracht und eine erste Mischung gebildet wird, und
(B) diese erste Mischung auf einer Fläche mechanisch schichtartig ausgebreitet und unter intensivem Mischen über diese Fläche transportiert wird, bis eine homogene Suspension gebildet ist, die von der Fläche abgenommen wird, wobei
(C) die Maßnahmen (A) und (B) kontinuierlich ausgeführt werden.

Die Erfindung beruht auf der Erkenntis, daß durch Anwendung der Schichttechnik, insbesondere der Dünnschichttechnik, eine homogene Cellulosesuspension auf einfache und schnelle Weise hergestellt werden kann.

Es hat sich ferner gezeigt, daß es im erfindungsgemäßen Verfahren auch auf einfache Weise möglich ist, mit der Cellulose Hilfsstoffe, wie Stabilisatoren, Dispergiermittel, Spinnhilfen, reaktivitätsverbessernde Reagenzien, Inkorporationsmedien anorganischer oder organischer Natur (Baryt, Aktivkohle, SiO₂, CMC, Modifikatoren (Polyethylenglykole) und andere Polymere, wie z.B. Nylon; Farbstoffe, homogen einzumischen. Dies ist für eine volle Entfaltung der Wirkung dieser Hilfsstoffe von entscheidender Bedeutung. Es hat sich ferner gezeigt, daß ein deratiges Dazumischen die Bildung der homogenen Suspension nicht verlangsamt.

Ein weiterer Vorteil des erfindungsgemäßen Verfahrens besteht darin, daß als das flüssige, wäßrige tertiäre Aminoxid, in welchem die zerkleinerte Cellulose suspendiert wird, eine bei Raumtemperatur flüssige wäßrige Lösung des tertiären Aminoxides und ein geschmolzenes, tertiäres Aminoxidhydrat eingesetzt werden können.

Bevorzugt wird im erfindungsgemäßen Verfahren ein flüssiges, wäßriges tertiäres Aminoxid eingesetzt, welches eine Temperatur im Bereich von 50 bis 85°C aufweist.

Gemäß dem erfindungsgemäßen Verfahren wird die Cellulose vorteilhaft während einer Zeit von 1 bis 5 Minuten über die Fläche transportiert. Dies bedeutet, daß die Cellulosesuspension bereits innerhalb weniger Minuten in homogener Form auf kontinuierliche Weise erhalten wird. Das erfindungsgemäße Verfahren stellt somit eine wesentliche Vereinfachung des Aminoxidverfahrens dar.

Die Erfindung betrifft auch die Verwendung einer Vorrichtung zur Durchführung des erfindungsgemäßen Verfahrens mit einem indirekt beheizbaren oder kühlbaren, mit einer Rühreinrichtung versehenen Gefäß, welches als zylindrischer Behälter mit einem zentrisch gelagerten Rotor und daran angesetzten Rührelementen, die einen Neigungswinkel α zur Achse des Rotors bilden, zum Mischen und Transportieren der mit dem flüssigen, wäßrigen tertiären Aminoxid in Kontakt gebrachten Cellulose ausgebildet ist, wobei der radiale Abstand der Rührelemente zur Innenwand des Behälters maximal 20 mm beträgt und im oberen Teil des Behälters Einlässe für die zerkleinerte Cellulose und das flüssige, wäßrige tertiäre Aminoxid und im unteren Teil ein Auslaß für die homogene Suspension vorgesehen ist.

Vorteilhaft wird eine Vorrichtung verwendet, bei welcher der Neigungswinkel α verstellbar ist.

Die Erfindung betrifft ferner ein Verfahren zur Herstellung einer formbaren Celluloselösung, welches dadurch gekennzeichnet ist, daß eine gemäß dem erfindungsgemäßen Verfahren hergestellte homogene Suspension unter Abdampfung von Wasser zu einer formbaren Celluloselösung verarbeitet wird. Die Herstellung der Celluloselösung wird zweckmäßig in einem Dünnschichtbehandlungsapparat durchgeführt. Ein derartiges Verfahren ist beispielsweise in der EP-A - 0 356 419 beschrieben. Eine Ausführungsform eines Dünnschichtbehandlungsapparates ist beispielsweise ein sogenannter Filmtruder, wie er von der Firma Buss AG (Schweiz) hergestellt wird. Ein Dünnschichtbehandlungsapparat ist auch in der DE-OS 2 011 493 beschrieben.

Die im Jahre 1994 veröffentlichte WO 94/06530 benützt die aus der EP-A - 0 356 419 vorbekannte Dünnschichttechnik, um aus einer Mischung von Cellulose in einer wäßrigen Lösung eines tertiären Aminoxides zu einer formbaren Lösung zu gelangen. Das Verfahren wird analog einer in der EP-A - 0 356 419 vorbeschriebenen Ausführungsform in einem Filmtruder durchgeführt. Das Verfahren der WO 94/06530 stellt sich die Aufgabe, Energie zu sparen und schlägt zur Lösung dieser Aufgabe vor, den Rotor langsamer zu drehen.

Die vorliegende Erfindung betrifft ferner ein Verfahren zur Herstellung cellulosischer Formkörper, das darin besteht, daß eine erfindungsgemäß hergestellte Cellulosesuspension in eine formbare Celluloselösung übergeführt wird, welche anschließend in an sich bekannter Weise zu Folien, Fasern, Membranen oder anderen Formkörpern verarbeitet wird.

Die erfindungsgemäß hergestellte Suspension kann über ein Dosiergerät direkt in den Filmtruder gespeist und dort zur Lösung verarbeitet werden. Auch ein Entgasungsextruder eignet sich zur Lösungsherstellung. In letzterem Fall muß die Suspension jedoch in konzentriertem Zustand vorliegen, da ein Entgasungsextruder nur eine sehr beschränkte Abdampfkapazität besitzt. Die erfindungsgemäß hergestellte Suspension kann auch in anderen Vorrichtungen in die Celluloselösung übergeführt werden. Ferner kann die Suspension vor der Überführung in die Lösung noch zusätzlich einem Mahlschritt unterworfen werden.

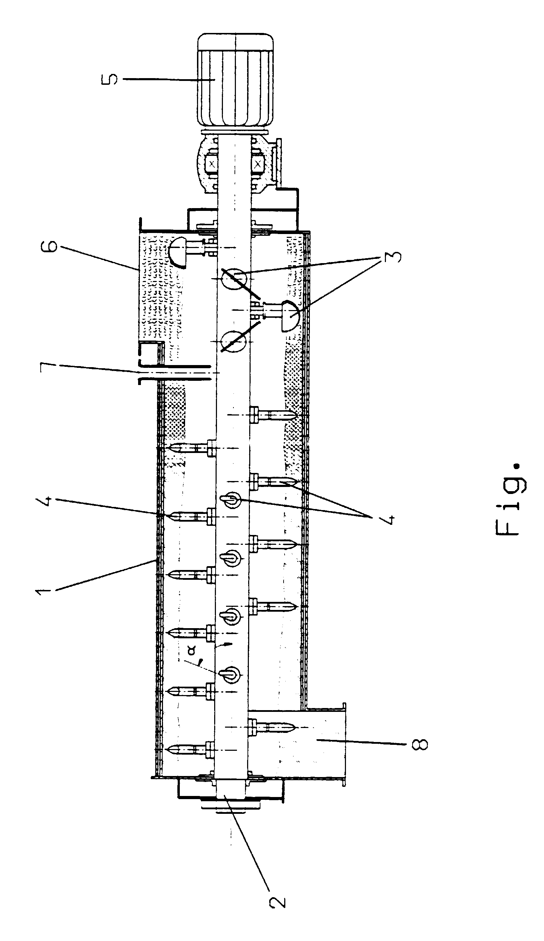

An Hand der beigefügten Zeichnung wird eine Vorrichtung beschrieben, in welcher das erfindungsgemäße Verfahren besonders gut ausgeführt werden kann. Die Zeichung zeigt schematisch den Aufbau eines erfindungsgemäß verwendeten Mischers. Derartige Mischer werden beispielsweise als Ringschichtmischer von der Firma Draiswerke GmbH, Mannheim, Deutschland, unter der Bezeichnung K-TT in den Handel gebracht.

Die Figur zeigt schematisch einen Längsschnitt eines horizontal aufgestellten Mischers, der im wesentlichen aus einem zylindrischen Behälter 1 mit einem Doppelmantel für eine indirekte Beheizung oder Kühlung des zu verarbeitenden Gutes, einem im Behälter 1 zentrisch gelagerten Rotor 2 mit daran angesetzten Transportblättern 3 und stachelförmigen Elementen 4. Der Rotor 2 wird mittels eines Motors 5 angetrieben.

Die zerkleinerte Cellulose wird über die Einlaßöffnung 6 in den zylindrischen Behälter 1 eingebracht, von den Transportblättern 3 erfaßt und in das Innere des Behälters 1 transportiert. Der Rotor 2 wird dabei so schnell gedreht, daß die zerkleinerte Cellulose von den Transportblättern aufgrund der Fliehkraft an die zylindrische Wand des Behälters geworfen wird und dort in Form einer Schicht in das Innere des Behälters 1 transportiert wird.

Die flüssige, wäßrige Aminoxidlösung wird über das Zugaberohr 7 dem Behälter zugegeben. Das Zugaberohr 7 reicht fast bis an den Rotor 2 und ist naturgemäß in einer Lücke zwischen benachbarten Transportblättern bzw. stachelförmigen Elementen angeordnet, so daß die Drehung des Rotors 2 nicht behindert wird. Durch die der Aminoxidlösung verliehenen Fliehkraft wird sie radial nach außen weggeschleudert, benetzt die Cellulose zunächst und es entsteht eine Mischung. Dieses Benetzungsstadium ist in der Figur schraffiert dargestellt. In Abhängigkeit von der Intensität des Mischens und dem Verhältnis von Aminoxidlösung zu Cellulose wird während des Transportes der Mischung über die Wand des Behälters 1 eine homogene Suspension gebildet, die über die Öffnung 8 entnommen wird und entweder sofort oder nach einer weiteren Bearbeitung, z.B. einem Mahlschritt, zur Herstellung der Celluloselösung verwendet werden kann.

Die stachelförmigen Elemente 4 sind etwas zur Achse des Rotors 2 geneigt und können auf diese Weise die Suspension weitertransportieren. Wesentlich ist, daß der Rotor so schnell gedreht wird, daß das Cellulose/Aminoxidgemisch an die Behälterwand geworfen wird und dort eine Schicht bildet. Ist der Radius des Behälters beispielswiese 15 cm, so ist eine beispielhafte Drehzahl des Rotors etwa 700 Umdrehungen pro Minute, um eine Schicht ausbilden zu können.

Die Erfindung wird mit dem folgenden Beispiel noch näher erläutert.

### Beispiel

Zur Herstellung der Suspension wurde ein sogenannter Ringschichtmischer K-TT 80 (aus Edelstahl) der Firma Draiswerke GmbH, Mannheim, Deutschland, verwendet. Die Funktionsweise dieses Mischers ist oben an Hand der Zeichnung beschrieben.

Der Ringschichtmischer wurde pro Stunde kontinuierlich mit 55 kg zerkleinerter Cellulose mit einer Partikelgröße von maximal 4 mm und 375 kg einer wäßrigen Lösung enthaltend 75 Masse% NMMO beschickt. Als Heizmedium diente Wasser mit einer Temperatur von 75°C. Im Ringschichtmischer herrschte Normaldruck. Der Rotor wurde mit 700 Umdrehungen pro Minute gedreht.

Es konnten pro Stunde 430 kg homogene Suspension mit einer Trockenstoffdichte von 12,8 Masse% Cellulose und einer Temperatur von 65°C aus dem Ringschichtmischer erhalten werden.

Die im Ringschichtmischer hergestellte Suspension wurde gemäß dem in der EP-A - 0 356 419 beschriebenen Verfahren mit einer Temperatur von 75°C in einen Filmtruder der Type Buss HS 0200 mit einer Geschwindigkeit von 430 kg/h eingespeist und dort in eine formbare Lösung mit einer Cellulosekonzentration von 15,0% übergeführt. Die Heizfläche des Filmtruders wurde mit Sattdampf von 142°C beheizt. Die Umfangsgeschwindigkeit des Rotors betrug 4 m/s und der Druck im Filmtruder betrug 50 mbar. Es wurden etwa 63 kg Wasserdampf pro Stunde abgezogen.

Mit den obigen Verfahrensparametern konnten pro Stunde etwa 367 kg formbare Celluloselösung mit einer Temperatur von 105°C aus dem Filmtruder abgezogen werden.

Die erhaltene formbare Lösung enthielt keine ungelösten Celluloseteilchen (mikroskopische Untersuchung), war entgast und konnte problemlos mit den aus der WO 93/19230 bzw. der WO 95/07811 bekannten Verfahren der Anmelderin zu Fasern bzw. Folien verarbeitet werden.

Die Verweilzeit der Cellulose im Ringschichtmischer betrug 2 Minuten. Dies bedeutet, daß es mit dem erfindungsgemäßen Verfahren möglich ist, in lediglich einigen wenigen Minuten aus den Ausgangsstoffen Cellulose und Aminoxidlösung eine homogene Suspension herzustellen, welche problemlos in eine formbare Celluloselösung übergeführt werden kann.

## Patentansprüche

1. Verfahren zur Herstellung einer Suspension von Cellulose in einem flüssigen, wäßrigen tertiären Aminoxid, indem zerkleinerte Cellulose mit dem flüssigen, wäßrigen tertiären Amionoxid vermischt wird, dadurch gekennzeichnet, daß
(A) die zerkleinerte Cellulose mit dem flüssigen, wäßrigen tertiären Aminoxid in Kontakt gebracht und eine erste Mischung gebildet wird, und
(B) diese erste Mischung auf einer Fläche mechanisch schichtartig ausgebreitet und unter intensivem Mischen über diese Fläche transportiert wird, bis eine homogene Suspension gebildet ist, die von der Fläche abgenommen wird, wobei
(C) die Maßnahmen (A) und (B) kontinuierlich ausgeführt werden.

2. Verfahren nach Anspruch 1, dadurch gekennzeichnet, daß als das flüssige, wäßrige tertiäre Aminoxid eine wäßrige Lösung des tertiären Aminoxides eingesetzt wird.

3. Verfahren nach Anspruch 1, dadurch gekennzeichnet, daß als das flüssige, wäßrige tertiäre Aminoxid ein geschmolzenes, tertiäres Aminoxidhydrat eingesetzt wird.

4. Verfahren nach einem der Ansprüche 2 oder 3, dadurch gekennzeichnet, daß ein flüssiges, wäßriges tertiäres Aminoxid eingesetzt wird, welches eine Temperatur im Bereich von 50 bis 85°C aufweist.

5. Verfahren nach einem der Ansprüche 1 bis 4, dadurch gekennzeichnet, daß die mit dem flüssigen, wäßrigen tertiären Aminoxid in Kontakt gebrachte Cellulose während einer Zeitspanne von 1 bis 5 Minuten über die Fläche transportiert wird.

6. Verwendung einer Vorrichtung zur Durchführung des Verfahrens nach einem der Ansprüche 1 bis 5 mit einem indirekt beheizbaren oder kühlbaren, mit einer Rühreinrichtung versehenen Gefäß, welches als zylindrischer Behälter (1) mit einem zentrisch gelagerten Rotor (2) und daran angesetzten Rührelementen (3, 4), die einen Neigungswinkel a zur Achse des Rotors (2) bilden, zum Mischen und Transportieren der mit dem flüssigen, wäßrigen tertiären Aminoxid in Kontakt gebrachten Cellulose ausgebildet ist, wobei der radiale Abstand der Rührelemente (3, 4) zur Innenwand des Behälters maximal 20 mm beträgt und im oberen Teil des Behälters (1) Einlässe (6, 7) für die zerkleinerte Cellulose und das flüssige, wäßrige tertiäre Aminoxid und im unteren Teil ein Auslaß (8) für die homogene Suspension vorgesehen ist.

7. Verwendung einer Vorrichtung gemäß Anspruch 6, bei welcher der Neigungswinkel α verstellbar ist.

8. Verfahren zur Herstellung einer formbaren Celluloselösung, dadurch gekennzeichnet, daß eine gemäß den Ansprüchen 1 bis 7 hergstellte homogene Suspension unter Abdampfung von Wasser zu einer formbaren Celluloselösung verarbeitet wird.

9. Verfahren nach Anspruch 8, d.g., daß es in einem Dünnschichtbehandlungsapparat durchgeführt wird.

10. Verfahren zur Herstellung cellulosischer Formkörper, dadurch gekennzeichnet, daß eine gemäß Anspruch 8 hergestellte formbare Celluloselösung in an sich bekannter Weise zu Folien, Fasern, Membranen oder anderen Formkörpern verarbeitet wird.

## Claims

1. Method for producing a suspension of cellulose in a liquid aqueous tertiary amine oxide by mixing comminuted cellulose with the liquid aqueous tertiary amine oxide, characterized in that
A) the comminuted cellulose is brought into contact with the liquid aqueous tertiary amine oxide and a first mixture is formed, and
B) said first mixture is mechanically spread out over a surface in layer form and is transported with intensive mixing across said surface until a homogeneous suspension is formed which is removed from the surface, wherein
C) the measures (A) and (B) are carried out continuously.

2. Method according to Claim 1, characterized in that an aqueous solution of the tertiary amine oxide is used as the liquid aqueous tertiary amine oxide.

3. Method according to Claim 1, characterized in that a molten tertiary amine oxide hydrate is used as the liquid aqueous tertiary amine oxide.

4. Method according to one of Claims 2 or 3, characterized in that a liquid aqueous tertiary amine oxide is used which is at a temperature in the range from 50 to 85°C.

5. Method according to one of Claims 1 to 4, characterized in that the cellulose brought into contact with the liquid aqueous tertiary amine oxide is transported over the surface during a time interval of 1 to 5 minutes.

6. Use of a device for carrying out the method according to one of Claims 1 to 5 comprising an indirectly heatable or coolable vessel which is provided with a stirring device and which, for the purpose of mixing and transporting the cellulose brought into contact with the liquid aqueous tertiary amine oxide is formed as a cylindrical container (1) having a centrally mounted rotor (2) and stirring elements (3, 4) which are attached thereto and which form an angle of inclination a with respect to the axis of the rotor (2), wherein the radial distance of the stirring elements (3, 4) from the internal wall of the container is not more than 20 mm and inlets (6, 7) for the comminuted cellulose and the liquid aqueous tertiary amine oxide are provided in the upper part of the container (1) and an outlet (8) for the homogeneous suspension is provided in the lower part.

7. Use of a device according to Claim 6, in which the angle of inclination α is adjustable.

8. Method for preparing a mouldable cellulose solution, characterized in that a homogeneous suspension prepared in accordance with Claims 1 to 7 is processed to form a mouldable cellulose solution by evaporation of water.

9. Method according to Claim 8, characterized in that it is carried out in a thin-film treatment apparatus.

10. Method for preparing cellulosic moulded bodies, characterized in that a mouldable cellulose solution prepared in accordance with Claim 8 is processed in a manner known per se to form sheets, fibres, membranes or other moulded bodies.

## Revendications

1. Procédé de production d'une suspension de cellulose dans un oxyde aminé tertiaire aqueux, liquide, au cours duquel de la cellulose broyée est mélangée avec l'oxyde aminé tertiaire aqueux, liquide,
caractérisé en ce que
**(A)** la cellulose broyée vient en contact avec l'oxyde aminé tertiaire aqueux, liquide et en ce qu'un premier mélange est formé, et
**(B)** en ce que ce premier mélange est répandu mécaniquement en couches sur une surface et en ce qu'il est transporté sur cette surface en subissant un mélange intensif jusqu'à ce qu'il se forme une suspension homogène qui soit enlevée de la surface, où
**(C)** les phases (A) et (B) sont effectuées en continu.

2. Procédé selon la revendication 1, caractérisé en ce que l'on utilise une solution aqueuse de l'oxyde aminé tertiaire comme oxyde aminé tertiaire aqueux, liquide.

3. Procédé selon la revendication 1, caractérisé en ce que l'on utilise un hydrate d'oxyde aminé tertiaire fondu comme oxyde aminé tertiaire aqueux, liquide.

4. Procédé selon la revendication 2 ou 3, caractérisé en ce que l'on utilise un oxyde aminé tertiaire aqueux, liquide qui présente une température comprise dans la plage variant entre 50 et 85°C.

5. Procédé selon l'une quelconque des revendications 1 à 4, caractérisé en ce que la cellulose placée au contact de l'oxyde aminé tertiaire aqueux, liquide est transportée sur la surface pendant un laps de temps compris entre 1 et 5 minutes.

6. Utilisation d'un dispositif d'exécution du procédé, selon l'une quelconque des revendications 1 à 5, avec un récipient pouvant être chauffé ou refroidi indirectement, doté d'un dispositif agitateur, lequel récipient est configuré comme un récipient (1) cylindrique équipé d'un rotor (2) monté de façon centrale et doté d'éléments agitateurs (3, 4) qui forment un angle d'inclinaison α par rapport à l'axe du rotor (2), et qui sert à mélanger et à transporter la cellulose placée au contact de l'oxyde aminé tertiaire aqueux, liquide, où la distance radiale des éléments agitateurs (3, 4) par rapport à la paroi intérieure du récipient est au maximum de 20 mm, et où il est prévu, dans la partie supérieure du récipient (1), des orifices d'entrée (6, 7) pour la cellulose broyée et pour l'oxyde aminé tertiaire aqueux, liquide et où il est prévu, dans la partie inférieure, un orifice de sortie (8) pour la suspension homogène.

7. Utilisation d'un dispositif selon la revendication 6, au cours de laquelle l'angle d'inclinaison α est réglable.

8. Procédé de production d'une solution de cellulose plastique, caractérisé en ce qu'une suspension homogène, produite selon l'une quelconque des revendications 1 à 7, est transformée en une solution de cellulose plastique par évaporation d'eau.

9. Procédé selon la revendication 8, caractérisé en ce qu'il est exécuté dans un appareil de traitement en couches minces.

10. Procédé de fabrication de corps moulés cellulosiques, caractérisé en ce qu'une solution de cellulose plastique, produite selon la revendication 8, est transformée, de façon en soi connue, en feuilles, fibres, membranes ou autres corps moulés.
